# EUROPÄISCHE PATENTSCHRIFT

(11) **EP 0 770 540 B1**
(45) Veröffentlichungstag und Bekanntmachung des Hinweises auf die Patenterteilung: **12.12.2001**
(21) Anmeldenummer: 96115262.6
(22) Anmeldetag: 24.09.1996
(51) Int. Cl.: B62D 25/00, B60N 2/36

(54) **Kraftfahrzeug mit umklappbaren Sitzlehnen**
Motor vehicle with folding seat-backs
Véhicule automobile avec sièges à dossiers rabattables

(30) Priorität: 27.10.1995 DE 19540048
(43) Veröffentlichungstag der Anmeldung: 02.05.1997
(73) Patentinhaber: Ford Global Technologies, Inc., Dearborn, Michigan 48126-2490 (US)
(72) Erfinder: Matheis, Anton, Ing. (grad), 51467 Bergisch-Gladbach (DE)
(74) Vertreter: Bonsmann, Manfred, Dipl.-Ing.

(56) Entgegenhaltungen:
- EP-A- 0 700 811
- GB-A- 2 279 863
- GB-A- 2 293 313

## Beschreibung

Die Erfindung betrifft ein Kraftfahrzeug mit umklappbaren Sitzlehnen an rückwärtigen Sitzen und mit einem mit den Sitzlehnen in deren oberem Bereich lösbar verbindbaren Querträger, der mit seinen Stirnendbereichen lösbar an in Fahrtrichtung auf gegenüberliegenden Bereichen der Innenkarosserie angeordneten Befestigungseinrichtungen anbringbar ist.

Die Anbringung von Sicherheitsgurten für auf den rückwärtigen Sitzen eines Kraftfahrzeuges sitzende Personen kann für die jeweils außensitzenden Personen an der Innenkarosserie des Kraftfahrzeuges erfolgen. Wenn aber die rückwärtigen Sitze zur Aufnahme von beispielsweise drei Personen ausgebildet sind und die Anbringung des Sicherheitsgurtes für die mittlere Person an der für diese vorgesehenen Sitzlehne erfolgt, ist es aus Sicherheitsgründen erforderlich, die entsprechende Sitzlehne gegenüber der Innenkarosserie des Kraftfahrzeugs so abzustützen, daß die Rückhaltekräfte des Sicherheitsgurtes von den Innenseitenwänden der Karosserie aufgenommen werden.

Aus der GB 22 79 863 A ist hierzu ein Querträger der eingangs genannten Art bekannt, der einerseits im oberen Bereich der Rückseiten der rückwärtigen Sitzlehnen lösbar befestigbar und andererseits mittels Befestigungseinrichtungen auf gegenüberliegend angeordneten Bereichen der Innenkarosserie lösbar anbringbar ist. Wenn der Bereich der rückwärtigen Sitze als Laderaum eingesetzt werden soll, kann der Querträger sowohl von den Sitzlehnen als auch von den an dessen Stirnenden angreifenden Befestigungseinrichtungen gelöst und entfernt werden. Die Sitzlehnen können dann umgeklappt werden, so daß der Raum als Laderaum verwendbar ist. Bei der bekannten Vorrichtung sind die Befestigungseinrichtungen derart ausgebildet, daß der Querträger gegenüber der Innenkarosserie des Kraftfahrzeugs in Fahrtrichtung des Kraftfahrzeugs, also quer zur Längsrichtung des Querträgers, arretiert ist.

Die vorangemeldete und nachveröffentlichte EP 0 700 811 A1 betrifft ein System von Sicherheitsgurten an der umklappbaren Rückbank eines Kraftfahrzeuges. Dabei zeigt sie einen mit den Sitzlehnen in deren oberem Bereich lösbar verbindbaren Querträger, der mit seinen Stirnendbereichen lösbar an in Fahrtrichtung auf gegenüberliegenden Bereichen der Innenkarosserie angeordneten Befestigungseinrichtungen anbringbar ist.

Der Erfindung liegt die Aufgabe zugrunde, Kraftfahrzeuge der eingangs genannten Art so umzugestalten, daß die Funktion des Querträgers erweitert bzw. verbessert wird.

Hierzu ist vorgesehen, daß die Stirnendbereiche des Querträgers in dessen angebrachter Position kraftschlüssig über die Befestigungseinrichtungen mit den gegenüberliegenden Bereichen der Innenkarosserie verbunden sind. Hierdurch wird erreicht, daß der Querträger an seinen Stirnendbereichen nicht nur so mit den gegenüberliegenden Bereichen der Innenkarosserie verbunden ist, daß Kräfte quer zur Längsrichtung des Querträgers übertragen werden können, sondern daß zusätzlich dazu über den Querträger eine kraftschlüssige Verbindung der gegenüberliegenden Bereiche der Innenkarosserie des Kraftfahrzeugs erfolgt. Dies führt zu einem günstigeren Vibrations- und Geräuschverhalten der Kraftfahrzeugkarosserie. Insbesondere bei sog. Kombi-Personenkraftfahrzeugen stellt nämlich die Karosserie einen relativ großen, nach hinten offenen Innenraum dar, der zwischen dem Bereich der Rücklehnen der Vordersitze und der Hecktür des Kraftfahrzeugs durch die Bodengruppe, das Dach und die Seitenwände mit einem nur unzureichenden Querverbund gebildet wird. Dies führt grundsätzlich zu der Gefahr, daß Schwingungen und Vibrationen auftreten, die während der Fahrt des Kraftfahrzeuges zu Dröhngeräuschen führen können. Gemäß der Erfindung wird der Querträger zusätzlich zu seiner ursprünglichen Funktion dazu eingesetzt, den Innenraum des Kraftfahrzeugs zu stabilisieren und damit die Karosseriesteifigkeit zu erhöhen und die Vibrationsansprechbarkeit der Karosserie zu verringern. Dieser günstige Effekt tritt auf, wenn der Querträger in Einbauposition ist, also dann, wenn das Kraftfahrzeug in erster Linie zum Transport von Personen und nicht von sperrigen Lasten eingesetzt wird.

Die Befestigungseinrichtungen sind als Klemmeinrichtungen mit konisch zueinander verlaufend gestalteten Aufnahmebereichen für die Stirnendbereiche des Querträgers ausgebildet. Die Stirnendbereiche des Querträgers weisen entsprechend konisch zueinander verlaufend gestaltete Anlagebereiche auf.

Besonders zweckmäßig ist es, wenn die Aufnahmebereiche und die Anlagebereiche als konisch zueinander verlaufende Aufnahmeflächen bzw. Anlageflächen ausgebildet sind.

In weiterer Ausgestaltung der Erfindung kann vorgesehen sein, daß jeweils eine der Aufnahmeflächen der Befestigungseinrichtungen von unten nach oben gesehen schräg entgegen der Fahrtrichtung des kraftfahrzeuges geneigt ausgebildet ist. Dies hat den Vorteil, daß auch im Falle einer nicht korrekten Funktion der Befestigungseinrichtungen der Querträger in seiner Position bleibt und dadurch eine sichere Verankerung der Sitzlehnen an dem Querträger gewährleistet ist.

Die Klemmeinrichtungen können beispielsweise als Kniehebelverschlußeinrichtungen ausgebildet sein. Alternativ kann vorgesehen sein, daß die Klemmeinrichtungen Klemmhebel und Sperrklinken aufweisen.

In weiterer Ausbildung der Erfindung kann vorgesehen sein, daß der Querträger wenigstens in seinem zwischen den Stirnendbereichen liegenden Abschnitt als einen durchgehenden Längsschlitz aufweisender Hohlprofilkörper ausgebildet ist. Bei einem als Schrägheckfahrzeug ausgebildeten Kraftfahrzeug kann an dem Längsschlitz eine klappbare Hutablage arretiert werden. Bei einem Kombi-Fahrzeug kann der Hohlraum des Hohlprofilkörpers zur Aufnahme einer Aufwickelwelle für eine Gepäckraumjalousie ausgebildet sein, deren freies Ende durch den Längsschlitz des Hohlprofilkörpers nach außen geführt ist.

In weiterer Ausbildung der Erfindung kann vorgesehen sein, daß die Stirnendbereiche des Querträgers als an den Enden des Hohlprofilkörpers angeordnete, vorzugsweise fest angebrachte, die konisch zueinander verlaufenden Anlagenflächen sowie Lageranordnungen für die Aufwikkelwelle aufweisende Endstücke ausgebildet sind.

Die Anbringung der Befestigungseinrichtungen kann auf Konsolen erfolgen, die jeweils zwischen dem rückwärtigen Radhaus und der C-Säulenstruktur des Kraftfahrzeugs angeordnet sind.

Die Erfindung wird nachfolgend anhand der in den beiliegenden Zeichnungen dargestellten Ausführungsbeispiele näher erläutert. Es zeigen:
- Fig. 1: eine schematische perspektivische Darstellung eines Abschnittes einer rückwärtigen Sitzlehne und eines Abschnittes eines Querträgers, welcher lösbar mit der Sitzlehne und außerdem mit dem der Innenkarosserie zugewandten Stirnendbereich über eine als Klemmeinrichtung ausgebildete Befestigungseinrichtung kraftschlüssig mit einem Innenwandbereich der Karosserie verbindbar ist;
- Fig. 2: eine schematische Darstellung der Anbringung eines Sicherheitsgurtes an einer rückwärtigen Sitzlehne sowie in Schnittdarstellung einen Querträger mit einer Verriegelungseinrichtung zur Verriegelung des Querträgers gegenüber der Sitzlehne;
- Fig. 3: eine schematische Darstellung (teilweise im Schnitt) einer als Kniehebelverschlußeinrichtung ausgebildeten Klemmeinrichtung zur kraftschlüssigen Verbindung des Querträgers mit der Innenkarosserie;
- Fig. 4: eine alternative Ausführungsform der Klemmeinrichtung mit einem Klemmhebel und einer Sperrklinke.

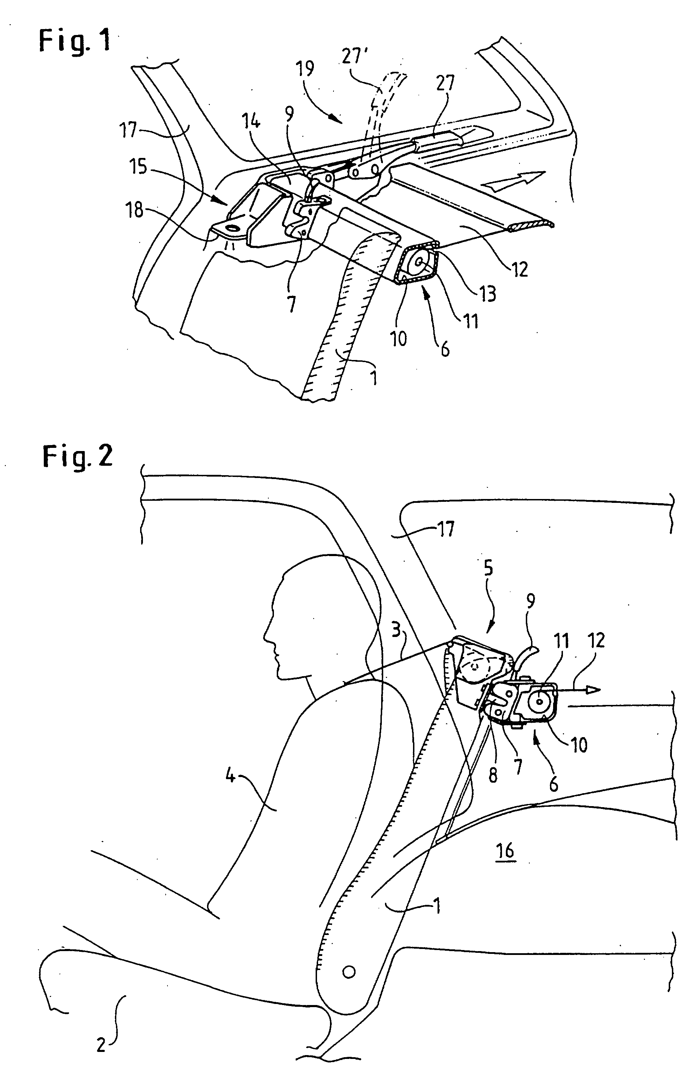

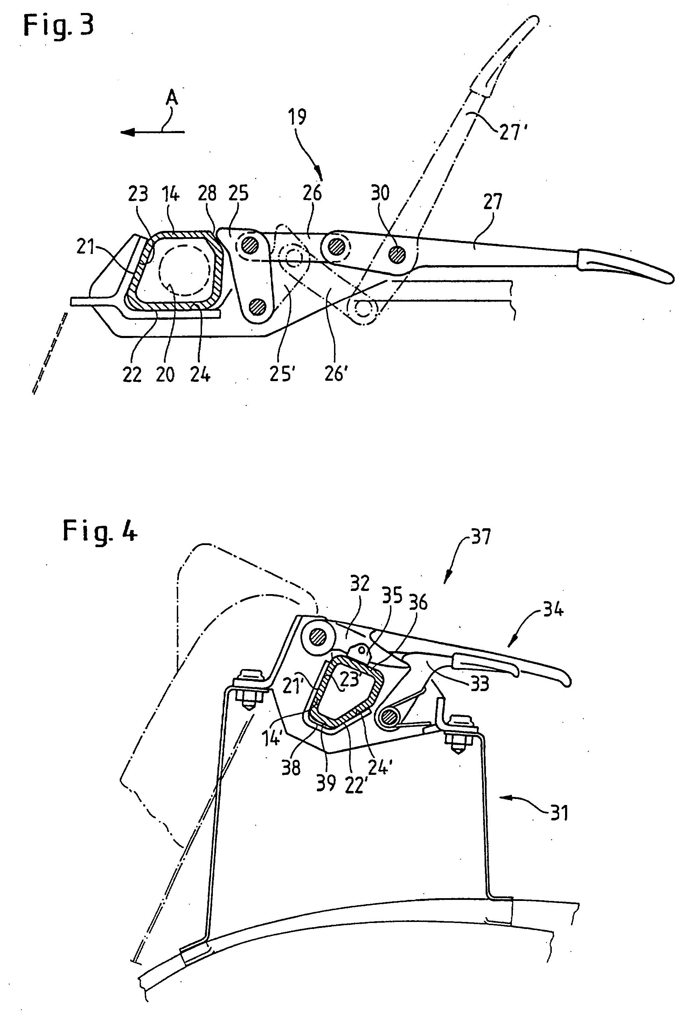

Ein als sog. Kombifahrzeug ausgebildetes Kraftfahrzeug weist eine geteilt ausgebildete, umklappbare Sitzlehne 1 an den rückwärtigen Sitzen 2 auf. Ein Sicherheitsgurt 3 für eine zwischen zwei außensitzenden Personen sitzende mittlere Person 4 weist eine Aufrollvorrichtung 5 auf, die im oberen Bereich der Sitzlehne 1 angebracht ist. Zur Arretierung der Sitzlehne 1 dient ein Querträger 6, der einerseits mit der Sitzlehne und andererseits mit seinen Stirnendbereichen lösbar mit der Innenkarosserie verbunden ist. Zur lösbaren Verbindung mit der Sitzlehne sind an dem Querträger 6 Lehnenverriegelungen 7 angebracht, in deren Öffnung jeweils eines von an der Sitzlehne fest angebrachten Verriegelungselementen 8 eingreifen kann. Die Verriegelung kann durch Betätigung eines Entriegelungshebels 9 gelöst werden. Über die Länge des Querträgers 6 sind mehrere Lehnenverriegelungen vorgesehen. Der Querträger 6 ist als Hohlprofilkörper ausgebildet, der in seinem Hohlraum 10 eine Aufwickelwelle 11 für eine Gepäckraumjalousie 12 aufnimmt, welche aus einem Längsschlitz 13 in Pfeilrichtung nach außen herausgeführt ist. Die Aufwickelwelle 10 ist in Endstücken 14 des Querträgers 6 gelagert. Die Endstücke sind an den Enden des Hohlprofilkörpers angeordnet und fest mit diesem verbunden. Die Endstücke 14 sind kraftschlüssig mit gegenüberliegenden Bereichen 15 der Innenkarosserie des Kraftfahrzeugs verbindbar. Hierzu sind bei dem dargestellten Ausführungsbeispiel zwischen einem mit 16 bezeichneten rückwärtigen Radhaus und einer mit 17 bezeichneten C-Säulenstruktur des Kraftfahrzeugs jeweils auf einer Konsole 18 Befestigungseinrichtungen zur kraftschlüssigen Verbindung der Stirnendbereiche des Querträgers 6 vorgesehen. Gemäß Fig. 1 und Fig. 3 ist die Befestigungseinrichtung als Klemmeinrichtung in Form eines Kniehebelverschlusses 19 ausgebildet, wobei in Fig. 1 und Fig. 3 die Arretierstellung des Kniehebelverschlusses in ausgezogenen und die Öffnungsstellung in strichpunktierten Linien dargestellt ist. Der Kniehebelverschluß 19 ist über die Konsole 18 starr mit der Innenkarosserie des Fahrzeugs verbunden. Das Profil des Endstücks 14 des Querträgers 6 ist aus Fig. 3 ersichtlich. Mit 20 ist schematisch die Lageranordnung für die Aufwickelwelle der Gepäckraumjalousie dargestellt. Der Kniehebelverschluß 19 weist etwa V-förmig angeordnete, konisch zueinander verlaufend gestaltete Aufnahmebereiche 21 und 22 für entsprechend konisch zueinander verlaufend gestaltete Anlagebereiche 23, 24 des Endstückes 14 auf. Die Aufnahmebereiche 21 und 22 und die Anlagebereiche 23 und 24 sind jeweils als Aufnahmeflächen bzw. Anlageflächen ausgebildet. Der flächig ausgebildete Aufnahmebereich 21 ist von unten nach oben gesehen schräg entgegen der mit A bezeichneten Fahrtrichtung des Fahrzeugs geneigt ausgebildet. Der Kniehebelverschluß 19 weist einen Klemshebel 25 auf, der über eine elastische Koppel 26 mit einem Handhebel 27 verbunden ist. Durch die Kniehebelwirkung im Totbereich der so gebildeten Gelenkkette wird eine hohe Anpreßkraft des Klemmhebels 25 gegen einen Bereich 28 des Endstücks 14 des Querträgers 6 erzielt, so daß auf diese Weise eine kraftschlüssige Verbindung zwischen dem Querträger 6 und den gegenüberliegenden Bereichen der Innenkarosserie erreicht wird. Ein Toleranzausgleich innerhalb des Hebelsystems kann entweder über die elastische Koppel 26 oder über einen Exzenterbolzen am Drehpunkt 30 erfolgen. Die Elemente des Kniehebelverschlusses in geöffneter Stellung sind jeweils mit " ' " gekennzeichnet. Durch die kraftschlüssige Verbindung des Querträgers werden zum einen - in bekannter Weise - die Sitzlehnen 1 in Fahrtrichtung A des Kraftfahrzeugs gegenüber der Innenkarosserie abgestützt, und es wird zum andern ein steifer Querverband innerhalb der Karosseriestruktur erreicht, wodurch Vibrationen und Dröhngeräusche verhindert bzw. verringert werden.

In Fig. 4 ist eine weitere Ausführungsform der als Klemmeinrichtung ausgebildeten Befestigungseinrichtung dargestellt, wobei das Profil des hier mit 14' bezeichneten Endstücks an einem Stirnendbereich des Querträgers 6 im Vergleich zu der Darstellung in Fig. 1 und 3 unterschiedlich ausgebildet ist.

An einer an der Innenkarosserie angebrachten und insgesamt mit 31 bezeichneten Konsole ist ein verschwenkbar angebrachter Klemmhebel 32 vorgesehen, welcher in Klemmstellung über eine schematisch dargestellte Sperrklinke 33 arretierbar ist. Das Lösen kann über eine insgesamt mit 34 bezeichnete Einrichtung erfolgen. Zum Toleranzausgleich ist ein elastisches Druckstück 35 vorgesehen, welches gegen einen Außenbereich 36 des Endstücks 14' anliegt. Außerdem liegt das Endstück 14' mit konisch gestalteten Anlagebereichen 23' und 24' gegen entsprechend konisch gestaltete Aufnahmebereiche 21' und 22' an. Dazwischen ist jeweils noch ein weiterer Aufnahmebereich 38 mit zugeordnetem Anlagebereich 39 vorgesehen.

## Patentansprüche

1. Kraftfahrzeug mit umklappbaren Sitzlehnen an rückwärtigen Sitzen und mit einem mit den Sitzlehnen in deren oberem Bereich lösbar verbindbaren Querträger, der mit seinen Stirnendbereichen lösbar an in Fahrtrichtung auf gegenüberliegenden Bereichen der Innenkarosserie angeordneten Befestigungseinrichtungen anbringbar ist, wobei die Stirnendbereiche (14) des Querträgers (6) in dessen angebrachter Position kraftschlüssig über die Befestigungseinrichtungen (19, 37) mit den gegenüberliegenden Bereichen der Innenkarosserie verbunden sind, indem die Befestigungseinrichtungen (19, 37) als Klemmeinrichtungen mit konisch zueinander verlaufend gestalteten Aufnahmebereichen (21, 22 bzw. 21', 22') für die Stirnendbereiche (14, 14') des Querträgers (6) ausgebildet sind und die Stirnendbereiche des Querträgers entsprechend konisch zueinander verlaufend gestaltete Anlagebereiche (23, 24 bzw. 23', 24') aufweisen.

2. Kraftfahrzeug nach Anspruch 1, **dadurch gekennzeichnet, daß** die Aufnahmebereiche und die Anlagebereiche als konisch zueinander verlaufende Aufnahmeflächen bzw. Anlageflächen ausgebildet sind.

3. Kraftfahrzeug nach Anspruch 2, **dadurch gekennzeichnet, daß** jeweils eine der Aufnahmeflächen (21, 21') der Befestigungseinrichtungen von unten nach oben gesehen schräg entgegen der Fahrtrichtung (A) des Kraftfahrzeugs geneigt ausgebildet ist.

4. Kraftfahrzeug nach einem der Ansprüche 1 bis 3, **dadurch gekennzeichnet, daß** die Klemmeinrichtungen (19) als Kniehebelverschlußeinrichtungen ausgebildet sind.

5. Kraftfahrzeug nach einem der Ansprüche 1 bis 3, **dadurch gekennzeichnet, daß** die Klemmeinrichtungen (37) Klemmhebel (32) und Sperrklinken (33) aufweisen.

6. Kraftfahrzeug nach einem der Ansprüche 1 bis 5, **dadurch gekennzeichnet, daß** der Querträger (6) wenigstens in seinem zwischen den Stirnendbereichen liegenden Abschnitt als einen durchgehenden Längsschlitz (13) aufweisender Hohlprofilkörper ausgebildet ist.

7. Kraftfahrzeug nach Anspruch 6, **dadurch gekennzeichnet, daß** der Hohlraum (10) des Hohlprofilkörpers zur Aufnahme einer Aufwickelwelle (11) für eine Gepäckraumjalousie ausgebildet ist, deren freies Ende (12) durch den Längsschlitz (13) des Hohlprofilkörpers nach außen geführt ist.

8. Kraftfahrzeug nach Anspruch 6 oder 7, **dadurch gekennzeichnet, daß** die Stirnendbereiche des Querträgers (6) als an den Enden des Hohlprofilkörpers fest angebrachte, die konisch zueinander verlaufenden Anlageflächen (23, 24 bzw. 23', 24') sowie Lageranordnungen (20) für die Aufwickelwelle (11) aufweisende Endstücke (14, 14') ausgebildet sind.

9. Kraftfahrzeug nach einem der Ansprüche 1 bis 8, **dadurch gekennzeichnet, daß** die Befestigungseinrichtungen (19, 37) jeweils auf einer Konsole (18, 31) zwischen dem rückwärtigen Radhaus (16) und der C-Säulenstruktur (17) des Kraftfahrzeugs angeordnet sind.

## Claims

1. Motor vehicle with folding seat-backs on rear seats and with a cross member which can be connected in a releasable way with the seat-backs in their upper area, wherein this cross member with its front end areas can be mounted in a releasable way on securing devices arranged in the direction of travel on opposing areas of the inner body, wherein the front end areas (14) of the cross member (6) in its mounted position are connected in a force-locking way via the securing devices (19 , 37) with the opposing areas of the inner body, in that the securing devices (19, 37) are formed as clamping devices with receiving areas (21, 22 or 21', 22') tapering to each other for the front end areas (14, 14') of the cross member (6) and the front end areas of the cross members have position areas (23, 24 or 23', 24') tapering to each other accordingly.

2. Motor vehicle according to Claim 1 **characterised in that** the receiving areas and the position areas are formed as receiving areas and position areas tapering to each other.

3. Motor vehicle according to Claim 2 **characterised in that** one of the receiving surfaces (21, 21') of the securing devices is formed inclined in a slanting way as seen from below to above contrary to the direction of travel (A) of the vehicle.

4. Motor vehicle according to one of the Claims 1 to 3 **characterised in that** the clamping devices (19) are formed as knee joint closure devices.

5. Motor vehicle according to one of the Claims 1 to 3 **characterised in that** the clamping devices (37) have clamping levers (32) and locking catches (33).

6. Motor vehicle according to one of the Claims 1 to 5 **characterised in that** the cross member (6) at least in its section lying between the front end areas is formed as a hollow profile body having a through longitudinal recess (13).

7. Motor vehicle according to Claim 6 **characterised in that** the hollow space (10) of the hollow profile body is formed for receiving a wind-up shaft (11) for a luggage hold venetian blind, whose free end (12) is guided outwards through the longitudinal recess (13) of the hollow profile body.

8. Motor vehicle according to Claim 6 or 7 **characterised. in that** the front end areas of the cross member (6) are formed as end pieces (14, 14') securely mounted on the ends of the hollow profile body and having the position surfaces (23, 24 or 23', 24') tapering to one another as well as bearing arrangements (20) for the wind-up shaft (11).

9. Motor vehicle according to one of the Claims 1 to 8 **characterised in that** the securing devices (19, 37) are arranged respectively on a support (18, 31) between the rear wheel house (16) and the C column structure (17) of the motor vehicle.

## Revendications

1. Véhicule automobile avec dossiers de sièges rabattables sur des sièges arrière et avec une barre transversale pouvant être raccordée de manière amovible aux dossiers de sièges dans leur partie supérieure, et qui peut être installée de façon amovible, avec ses parties terminales frontales, sur des dispositifs de fixation placés dans le sens de la marche sur des parties opposées de la carrosserie intérieure, les parties terminales frontales (14) de la barre transversale (6) étant raccordées de manière adhérente, dans leur position d'installation, aux parties opposées de la carrosserie intérieure à l'aide des dispositifs de fixation (19, 37), du fait que les dispositifs de fixation (19, 37) sont formés comme des dispositifs de serrage avec des parties de logement (21, 22 ou 21', 22') coniques les unes par rapport aux autres, pour les parties terminales frontales (14, 14') de la barre transversale (6) et du fait que les parties terminales frontales de la barre transversale présentent des parties d'appui (23, 24 ou 23', 24') réalisées de façon conique de manière correspondante.

2. Véhicule selon la revendication 1, **caractérisé en ce que** les parties de logement et les parties d'appui sont formées comme des surfaces de logement ou des surfaces d'appui coniques l'une par rapport à l'autre.

3. Véhicule selon la revendication 2, **caractérisé en ce que** l'une des surfaces de logement (21, 21') des dispositifs de fixation, vue du bas vers le haut, est formée respectivement de manière oblique en sens contraire du sens de marche (A) du véhicule.

4. Véhicule selon l'une des revendications 1à 3, **caractérisé en ce que** les dispositifs de serrage (19) sont formés comme dispositifs de fermeture à genouillère.

5. Véhicule selon l'une des revendications 1 à 3, **caractérisé en ce que** les dispositifs de serrage (37) présentent des leviers de blocage (32) et des cliquets d'arrêt (33).

6. Véhicule selon l'une des revendications 1 à 5, **caractérisé en ce que** la barre transversale (6) est formée, au moins dans sa section située entre les parties terminales frontales, comme un corps profilé creux présentant une fente longitudinale (13) continue.

7. Véhicule selon l'une des revendications 1 à 6, **caractérisé en ce que** l'espace creux (10) du corps profilé creux est formé pour le logement d'un arbre d'enroulement (11) pour un store de coffre dont l'extrémité libre (12) est dirigée vers l'extérieur par la fente longitudinale (13) du corps profilé creux.

8. Véhicule selon l'une des revendications 6 ou 7, **caractérisé en ce que** les parties terminales frontales de la barre transversale (6) sont formées comme des surfaces d'appui (23, 24 ou 23', 24') coniques les unes par rapport aux autres et installées de façon fixe sur les extrémités du corps profilé creux ainsi que comme des pièces terminales (14, 14') présentant des dispositions de paliers (20) pour l'arbre d'enroulement (11).

9. Véhicule selon l'une des revendications 1 à 8, **caractérisé en ce que** les dispositifs de fixation (19, 37) sont disposés respectivement sur une console (18, 31) entre le passage arrière de roue (16) et le montant à colonne C (17) du véhicule.
